Europäisches Patentamt

**European Patent Office**

Office européen des brevets

(19)

(11) Publication number: **0 124 220**
**B1**

(12) **EUROPEAN PATENT SPECIFICATION**

(45) Date of publication of patent specification: **13.01.88**

(51) Int. Cl.⁴: **A 01 F 29/02**

(21) Application number: **84301403.6**

(22) Date of filing: **02.03.84**

(54) **A chopper device for a forage harvester.**

(30) Priority: **02.03.83 DK 1067/83**

(43) Date of publication of application:
**07.11.84 Bulletin 84/45**

(45) Publication of the grant of the patent:
**13.01.88 Bulletin 88/02**

(84) Designated Contracting States:
**AT BE CH DE FR GB IT LI LU NL SE**

(56) References cited:
**DE-B-1 193 721**
**DE-C- 926 764**
**FR-A-1 353 883**
**US-A-2 679 873**

(73) Proprietor: **MASKINFABRIKEN TAARUP A/S**
**DK-5300 Kerteminde (DK)**

(72) Inventor: **Larsen, Borge**
**Kystvej 29**
**DK-5300 Kerteminde (DK)**

(74) Representative: **MacFarlane, John Anthony**
**Christopher et al**
**HASELTINE LAKE & CO. Hazlitt House 28,**
**Southampton Buildings Chancery Lane**
**London WC2A 1AT (GB)**

Courier Press, Leamington Spa, England.

## Description

The invention relates to a chopper device for a forage harvester, comprising a disc-shaped web plate which is rotatable about a preferably horizontal axis and whose one side mounts at least two sets of cutters differently spaced from the axis of rotation.

A chopper device of this type known from the DE—C—926 764 has two inner cutters extending helically outwards from the centre of the web plate to a distance of about half the web plate radius from the centre, and two outer cutters which are curved too and cover the rest of the radius of the plate. This special configuration and grouping of the cutters serve to reduce the consumption of energy in the operation of the chopper device and to improve the material conveying capacity of the cutters.

US—A—2 557 897 discloses a lawn mower with a fixed cutter, which extends in the entire operating width of the machine and has such a Z-shaped cross-section that it can yield somewhat when striking obstacles, such as stones or iron objects. However, the resilience will be rather limited because of the cutter length, unless the cutter blade is made very thin. If, in spite of the resilience, the cutter is damaged locally by an obstacle, the entire long cutter has to be replaced.

DE—B—1 193 721 discloses a chopper device for a cutting machine comprising a disc-shaped web plate, rotatable about a horizontal axis, having cutters each of which is secured by a support to the web plate and between the support and the straight cutting part of the knife there is an intermediate knife portion consisting of a straight part and a curved part, the whole being connected to the support by a pivot, so that each knife when meeting an obstacle can yield against the action of a spring to a neutral position, in which it is held by a locking device.

The above-mentioned chopper devices have the feature in common that replacement of a cutter is relatively expensive due to the cutter length and as to DE—C—926 764 due also to the special design. Moreover, it applies to all of the cited structures that the considerable length of the cutters makes it difficult to maintain the desired distance to the counter cutter or cutters through the entire cutter length.

The object of the invention is to provide a chopper device of the present type which combines good cutting capacity and relatively low consumption of energy with low cutter replacement costs.

This object is achieved in that each cutter has a base portion which is rigidly connected to the web plate and a substantially straight cutting edge portion connected to the base portion by an intermediate portion, and that the three portions are integral and so constructed and disposed with respect to each other that when striking an obstacle the cutting edge portion deflects rearwardly in a direction away from the counter cutter with which the cutters cooperate and towards the web plate. The grouping of the cutters in a radial direction combined with the straight cutting edge portion results in relatively short cutters, which have good resilience upon striking hard foreign bodies because of the stated configuration, and are inexpensive and easy to replace. The relatively short cutters may moreover be adjusted individually at the optimum distance from the counter cutter by simple means, such as spacer plates placed between the base portion of the cutters and the web plate. Further, the ability of the cutters to deflect away from the counter cutter makes it more likely that damage will be limited to a single cutter as such deflection may entail that the cutter also sweeps the foreign body in question away from the counter cutter. In addition, the cutter is prevented from being deformed so that it engages the counter cutter, which might cause additional damage, such as deformation of the web plate.

Expediently, the cutters may have a U-shaped cross-section. When each cutter forms an angle with the radius of the disc-shaped web plate, and this angle is different for the inner and the outer cutters, all cutters may then be caused to operate with the most favourable cutting angle with respect to the counter cutter.

An adjustment facility is necessary since the web plate may be a little oblique and the height of the cutters may vary, i.e. in the distance of the cutting edges from the web plate, and because the cutters are to pass close by the counter cutter, in practice at a distance of not more than 0.5 mm. Such a facility can be provided by the above-mentioned spacer plates.

The invention will be explained more fully below with reference to the drawing, in which

Fig. 1 is a schematic vertical section through the operating parts of a forage harvester with an embodiment of the chopper device of the invention,

Fig. 2 is an enlarged section through a part of the chopper device web plate and a cutter fitted on it, and

Fig. 3 is a front view of a cutter device of the invention.

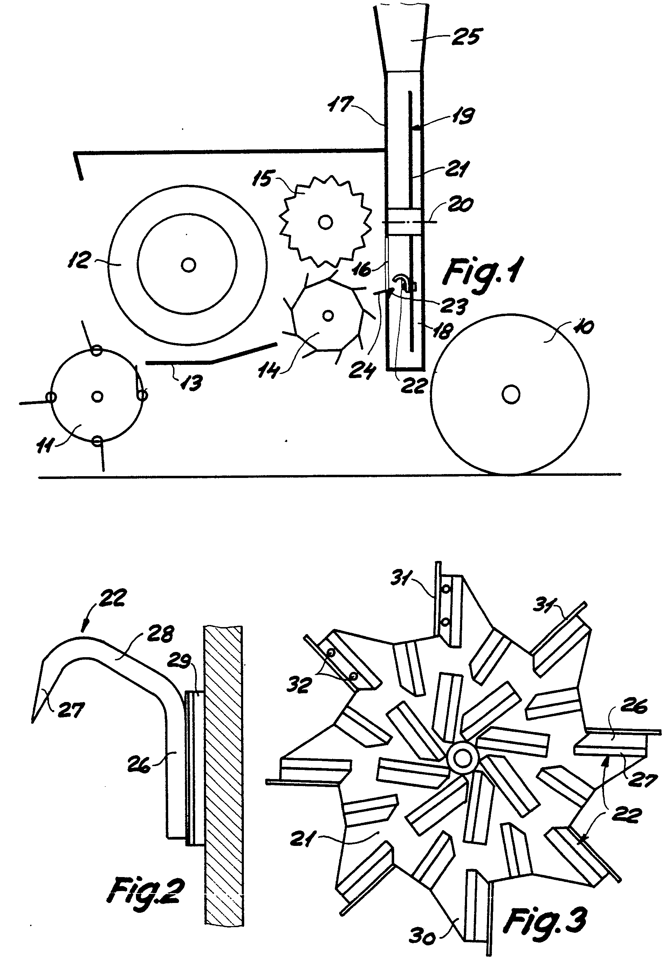

In Fig. 1, the symbol 10 represents the ground wheel of a forage harvester, and the symbol 11 represents a pick-up roll picking up crop from the ground and passing it to an auger 12 which conveys the material on a tray 13 to two feed rolls 14 and 15. These rolls squeeze the material through an opening 16 in the front wall 17 of a chopper housing 18, in which a chopper device generally designated by 19 is so journalled as to be rotatable about a horizontal longitudinal axis 20. The chopper device 19 consists of a web plate 21 whose front side mounts a plurality of cutters generally designated by 22, only one of them being shown in Fig. 1. A counter cutter 23 is fitted at the lower edge of the opening 16 on the interior of the front wall 17 of the housing 18; during the rotation of the chopper device the cutters 22 pass close by the counter cutter 23 and cooperate with it to chop or cut the material supplied. A guide plate 24 serving to guide the material into the opening 16 is fitted at the lower edge of the opening on the exterior of the front wall 17. As will be described below, the chopper device 19 also forms a thrower/blower which whirls the chopped material up through a discharge pipe 25.

The preferred cross sectional shape of the cutters is shown in detail in Fig. 2. It will be seen that each cutter 22 has a base portion 26 attached to the web plate 21 and a cutting edge portion 27 spaced somewhat from the web plate and connected to the base portion 26 through an intermediate portion 28. The transitions between the three cutter portions are smoothly rounded. The thickness of the cutter is so adapted to the cutter length and the characteristics of the material that an obstacle in the form of a foreign body, such as an iron bolt, getting between a cutting edge and the counter cutter 23 will cause the cutting edge portion 27 and the intermediate portion 28 to deflect rearwardly towards the web plate 21 and away from the counter cutter before the force transmitted to the web plate becomes sufficiently great to deform it. The deflection of the cutter absorbs the kinetic energy released when the chopper device 19 is stopped or its speed of revolution is reduced by the obstacle.

Fig. 2 shows a plurality of spacer plates 29 of different thicknesses placed between the base portion 26 of the cutter and the web plate 21. These spacer plates permit adjustment of the location of the cutting edge of the cutter with respect to the fixed counter cutter 23, Fig. 1, so that the two cutting edges of the cutter and the counter cutter can cooperate effectively to cut the forage material supplied.

It appears from Fig. 3 that the web plate 21 is in the form of a wheel disc with circumferentially and evenly spaced serrations 30, whose leading edges are disposed substantially in radial planes. A throwing/blowing plate 31 is disposed in a conventional (not shown) manner at right angles to each of these leading edges.

The cutters 22 are arranged in three concentric, circular groups each having eight cutters. Each cutter is secured to the web plate by means of two bolts 32 which extend through holes in the base portion 26 of the cutter, in the spacer plates 29 and in the web plate 21. As will be seen, the cutters are so mounted that their cutting edges form angles with the radii, and these angles are greatest for the innermost knives, a little smaller for the intermediate knives and almost zero for the outermost knives. The purpose of these angles is to provide optimum cutting conditions. The bolts 32 serving to secure the outermost knives 22, which are disposed along the leading edges of the serrations 30, may also extend through holes in (not shown) flanges on the throwing/blowing plates 31 and thus serve to attach these at the same time.

Both the configuration of the individual knives and their distribution on the web plate may differ from what is shown in the drawing and described in the foregoing.

**Claims**

1. A chopper device for a forage harvester, comprising a disc-shaped web plate (21) which is rotatable about a preferably horizontal axis (20) and whose one side mounts at least two sets of cutters (22) differently spaced from the axis of rotation, characterized in that each cutter (22) has a base portion (26) which is rigidly connected to the web plate (21) and a substantially straight cutting edge portion (27) connected to the base portion by an intermediate portion (28), and that the three portions are integral and so constructed and disposed with respect to each other that when striking an obstacle the cutting edge portion deflects rearwardly in a direction away from the counter cutter (23) with which the cutters cooperate and towards the web plate.

2. A chopper device according to claim 1, characterized in that the cutters (22) are substantially U-shaped in cross-section.

3. A chopper device according to claim 1 or 2, characterized in that each cutter (22) forms an angle with the radius of the disc-shaped web plate (21), and that this angle is different for the inner and the outer cutters.

**Patentansprüche**

1. Hackvorrichtung für Grünfutterernter, mit einer um eine vorzugsweise waagerechte Achse (20) umlaufenden scheibenförmigen Trägerplatte (21), wobei an der einen Seite der Platte mindestens zwei in unterschiedlichem Abstand von der Drehachse befindliche Messersätze (22) befestigt sind, dadurch gekennzeichnet, dass jedes Messer ein mit der Platte (21) starrverbundenes Grundteil (26) sowie ein über ein Zwischenteil (28) mit dem Grundteil verbundenes, im wesentlichen geradliniges Schneidenteil (27) aufweist, und dass die drei Messerteile derart ausgebildet und im Verhältniss zu einander so angeordnet sind, dass das Schneidenteil (27) beim Auftreffen auf ein Hindernis von einer mit dem Schneidenteil zusammenwirkenden Gegenschneide (23) weg nach hinten zur Trägerplatte (21) abgebogen wird.

2. Hackvorrichtung nach Anspruch 1, dadurch gekennzeichnet, dass die Messer (22) einen im wesentlichen U-förmigen Querschnitt aufweisen.

3. Hackvorrichtung nach Anspruch 1 oder 2, dadurch gekennzeichnet, dass jedes Messer (22) mit dem Radius der scheibenförmigen Trägerplatte (21) einen beim inneren und äusseren Messersatz unterschiedlichen Winkel bildet.

**Revendications**

1. Dispositif hacheur pour une ramasseuse-hacheuse comportant une plaque pleine en forme de disque (21) qui peut tourner autour d'un axe (20) de préférence horizontal et dont, une face porte au moins deux ensembles de couteaux (22) situés à des distances différentes de l'axe de rotation, caractérisé en ce que chaque couteau (22) comporte une partie de base (26) qui est reliée rigidement à la plaque pleine (21) et une *partie formant arête de coupe (27)* sensiblement rectiligne, raccordée à la partie de base au moyen d'une partie intermédiaire (28), et que les trois parties sont formées d'un seul tenant et sont constituées et disposées les unes par rapport aux autres de telle sorte que, lors de la rencontre d'un obstacle, la partie formant arête de coupe fléchit en arrière dans une direction s'écartant du couteau antagoniste (23), avec lequel les couteaux coopèrent, et en direction de la plaque pleine.

2. Dispositif hacheur selon la revendication 1, *caractérisé en ce que les couteaux (22)* possèdent une section en coupe transversale sensiblement en forme de U.

3. Dispositif hacheur selon la revendication 1 ou 2, caractérisé en ce que chaque couteau (22) fait un angle avec le rayon de la plaque pleine en forme de disque (21), et que cet angle est différent pour les couteaux intérieurs et pour les couteaux extérieurs.

Fig.1

Fig.2

Fig.3